# EUROPEAN PATENT SPECIFICATION

(11) **EP 1 387 040 B1**
(45) Date of publication and mention of the grant of the patent: **06.12.2006**
(21) Application number: 03405529.3
(22) Date of filing: 14.07.2003
(51) Int. Cl.: F01D 5/00, F01D 5/28, B05D 5/00, C25F 5/00

(54) **Method of protecting partial areas of a component**
Verfahren zum Schutz von Teilflächen eines Werkstücks
Procédé pour la protection d'une aire partielle d'une pièce de travail

(30) Priority: 02.08.2002 EP 02405673
(43) Date of publication of application: 04.02.2004
(73) Proprietor: Alstom Technology Ltd, 5400 Baden (CH)
(72) Inventor: Bögli, Andreas, 5430 Wettingen (CH); Fernihough, John, Dr., 5408 Ennetbaden (CH); Stankowski, Alexander, Dr., 5432 Neuenhof (CH)

(56) References cited:
- EP-A- 1 076 106
- US-A- 5 318 091
- US-A- 6 165 345
- US-B1- 6 193 762
- US-B1- 6 376 800

## Description

### FIELD OF THE INVENTION

The invention relates to a process of applying a thermo-chemical or mechanical removal process to a gas turbine component according to the claim 1.

### BACKGROUND OF THE INVENTION

Components such as gas turbine blades, vanes and other cooled parts often contain cavities that distribute cooling air to a plurality of holes in the wall of the part that lead to the outer surface. Most turbine components are coated for protection from oxidation and/or corrosion with, for example, a metallic coating such as MCrAIY or a diffusion coating and some are also coated with a thermal barrier coating (TBC) for thermal insulation. The demands of operation of the parts in a gas turbine often lead to the degradation and consumption of the coating before the structural integrity of the underlying part itself is degraded. Hence, the metallic and ceramic coating must be removed and reapplied at least once during the lifetime of the component.

Thermochemical and physical processing of blades after initial manufacturing can be very problematic for parts with a large number of cooling holes. During original part manufacture, the coatings are usually applied first and then the holes are drilled directly through the coating and the wall thickness of the component. However, the holes are already in place during the repair operations, such as acid or alkaline chemical stripping, used to remove old coatings, or grit blasting, water-jet stripping, high speed grinding abrasive techniques and, high speed milling. As an example, US-A-5,167,721 discloses a method of removing a plasma sprayed and sintered coating by liquid jet. A method of electrochemical stripping of turbine blades is disclosed in US-A-6,165,345. Another method of removing an environmental coating on a metallic substrate is known from US-A-5,851,409. The coating containing cracks is subjected to an acidic solution that penetrates the cracks and interacts with the diffusion zone so as to chemically strip the diffusion coating from the substrate. US-B1-6,174,448 discloses a method of removing a diffusion aluminide coating of a component. This method removes the coating by stripping aluminium from the coating without causing excessive attack, alloy depletion and gross thinning of the underlying superalloy substrate. Similar methods are known from US-A-5,728,227 or EP-A2-861 919. Methods of removing a thermal barrier coating are known, e.g. from the documents US-A-6,158,957, US-A-6,132,520, US-A-5,900,102, US-A1-2001/0009247, US-B1-6,210,488, US-A-5,614,054.

Unfortunately, during processing the chemical agents that are applied to remove the coating also react to a certain extent with the base material or the recast zone of laser drilled cooling holes, resulting in dimensional changes - in particular widening of the holes. The change in shape or diameters of the holes brought about during processing can have a significant influence on the effectiveness of the cooling holes, especially considering that some holes are 1 mm or less in diameter. Specially shaped cooling holes are particularly susceptible to this as their effectiveness depends heavily on the accuracy of the shape of the hole. This problem is particularly great for the most modern components which contain hundreds of cooling holes and are designed to operate within very tight tolerance bandwidths - the upper limit on cooling hole diameter to stop the waste of unneeded cooling air which drastically reduces engine efficiency and power output and the lower limit on cooling hole diameter to prevent overheating of the component, which would lead to its premature failure in service. Chemical etching / stripping methods can lead to an attack of the surface layer of the cooling holes, leaving oversized holes that flow outside of the originally intended specification. Grit blasting and other physical processes involving grinding can erode away the edges and surface contour of the cooling holes at the upper surface of the component, again bringing the air flow to outside specified limits.

There have been several disclosures relating to this problem and there are several widely known practices. Those skilled in the art are aware that a common practice is to fill the holes with a suitable material such as plastic or wax as disclosed for example in US 6, 165, 345. However the wear, thermal and chemical resistance of this material is often insufficient to maintain a desired level of filling in the cooling holes during preparation steps while processing which often involves surface grit blasting to clean the outer surface of the component. Due to its lack of wear resistance, the plastic or wax readily is eroded away by the grit blasting. Commonly used plastics are easily infiltrated by the strong acid solutions leading to their spallation and subsequent attack of the no longer protected base material.

US 6,376,800 discloses the use of a maskant for the edges of a ceramic thermal barrier coating on a gas turbine component that is able to withstand high temperatures due to a laser drilling process. The maskant material consists of a pasty mixture of powdered metal, silica, and solvent.

EP 1 076 106 discloses a process of coating a gas turbine component, where a thickened maskant material comprising an organic material, a resin of a plastic is used to achieve that the applied coating has a hole of certain dimensions. The maskant is effectively able to withstand the coating process such that an existing hole in the component is not decreased in size and a hole is shaped in the coating.

### SUMMARY OF THE INVENTION

It is an object of the present invention to find a cheaper, easier and faster method to provide greater wear, thermal and chemical resistance to a masking material so that it remains in sufficient quantity on parts of a component to protect the covered areas during various thermochemical or physical processes to be carried out. It is another object of the invention to find a method of adequately protecting all holes of a component from being dimensionally affected beyond a desired limit with the thermochemical or physical process carried out on the component. This invention is particularly suited to prevent the changing beyond desired limits of the cooling holes in gas turbine blades and stator vanes with a chemical stripping method designed to remove ex-service coatings.

According to the invention a process was found of protecting local areas of a gas turbine component with an external surface, before a thermochemical or mechanical process is carried out on the surface of the component, method comprising the steps of
(a) applying a masking material to the local area so that the local area is protected by the masking material, said masking material containing at least one filler material,
(b) at least partially thickening the masking material,
(c) carrying out the thermochemical or physical removal process for the removal of material from the surface of the component and
(d) removing the thickened masking material from the local area of the component.

The invention departs from the state of the art by the addition of a hard filler material to the masking material used to protect any part of a component such as braze joint, local parts of a coated area, such as a platform of a gas turbine blade or a coated area on top of a braze joint as well as other sensitive areas (e.g. impingement plate etc.) or cooling holes from being affected. The filler material imparts a surprising and unexpected resistance to physical erosion during grit blasting and as a result, the masking material is much more advantageous than the state of the art in its effectiveness in protecting the cooling holes. The chemical or physical (i.e. mechanical) process however could as well be one of a chemical etching method, acid or alkaline stripping, water jet stripping, grit blasting, high speed grit blasting or another abrasive technique.

According to this invention the polymer masking material, when it contained an appropriate filler, could be filled into the cooling holes only up to the exterior surface of the component and still adequately protect the cooling holes from being affected by thermochemical and physical processes. The filler material is selected from particles or fibres of metal, oxide material such as silica, magnesia, calcia, alumina, zirconia, yttria or a mixture there of, which provided adequate wear and thermal resistance in the range of 10 to 90 vol.-% and in a preferred range of 20 - 60 vol.-%. A range of filler particle sizes is effective in improving wear resistance and thermal resistance of the masking material. Particle sizes from 1 µm average diameter to over 500 µm diameter are possible. However the average particle size from 10 µm to 150 µm, with a preferred range of 40 to 100 µm showed superior improvements to the thermochemical or mechanical resistance and general handling of the masking material compared to a general size range. Metallic fillers, other oxide fillers or organic materials mixtures are also possible.

The masking material can be applied to the cooling holes from the external surface which consumes far less of the polymer compared to any of the prior art using such masking materials in which either the entire cooling configuration had to be filled with polymer, or the entire component had to be dipped in polymer. Still one embodiment is to apply the masking material from an internal cavity of the component.

The energy source used to thicken the mask material can be placed on the outside of the component so that the energy impinges directly on said masking material which plugs the cooling holes. Still it is possible that the energy source is placed into an cavity of the component.

It was found that residual polymer on the outer surface of the component would affect the efficiency of the applied thermochemical or physical process, hence the need to clean the entire surface. Thus, a substance which fluoresces under ultraviolet light was added to the masking material, which allows an inspection to locate any unwanted excess residual masking material. Inspection was performed using ultraviolet lights of the types found in normal Florescent Penetrant Inspection (FPI) booths well known to those skilled in the art. Any excess masking material on the surface of the component was removed by mechanical means in preparation for the stripping process. In one embodiment, this is achieved without interruption of the grit blasting process by integrating the UV light source into the grit blasting cell and equipping the blasting cell with windows of appropriately UV blocking glass or plastic. After removing unwanted residual masking material a re-inspection is carried out using ultraviolet light to locate any further unwanted residual masking material. It may be necessary to reapply masking material to the cooling holes, if some of the protecting masking material had been eroded away by the cleaning process of unwanted masking material.

In order to facilitate the application and/or hardening of at least a portion of the masking material the component may be heated before or during processing.

It was also found that filling the cooling holes or protecting the parts in successive stages which it is at least partially thickened before the application of the next amount in the cooling hole or on the part, and using a gradient of filling materials offered advantages. Only the layers of material at the uppermost portions of the cooling holes required significant volume fractions of solid fillers in the range of 30 - 80 vol.-% with a grain size of 40 - 150 µm to a depth not less than 1 mm to give them wear resistance against the grit blasting required to clean the entire outer surface of the component prior to the coating operation.

In a further embodiment of the current invention, for the cases where there is still masking material or filler material in the cooling holes, a water jet or an ultrasonic cleaning treatment after the burnout of the polymer could be used to remove any residue of masking material which is in the cooling holes. This step can be done manually, or by locating the cooling holes using a three dimensional vision system which directs a CNC machine using the same program to drill the cooling holes in the first place.

The masking material can be a special UV polymerizing plastic such as polyurethane, a polyurethane oligomer mixture, 2-Hydroxyl Methacrylate, Isobornyl Acrylate, Maleic acid, methyl methacrylate, butyl acrylate copolymer, acrylic acid, T-Butyl Perbenzoate, poly(isobutyl methacrylate), poly(vinyl toluene), polyproplyene or a polypropylene / polyurethane oligomer mixture, the class of polymers vetones or silicones, or any mixture thereof. It can as well be a photopolymerizing resin or a mixture of resins and photoinitiator which polymerize with exposure to ultraviolet light. The masking material may also be a substance that is not at least partially liquid but rather a powder, which means a collection of solid particles, or a slurry, which is a suspension of solid particles in a liquid.

The thickened masking material containing the filler material is heated or processed so as to volatilize or otherwise remove the volatile, un-polymerized organic portion of the masking material before the thermochemical or physical process on the surface of the component is carried out. There may be included in the resin binding agents which are effective in holding together the solid particles of metal or oxide after the organic portion of the masking material is removed so that it can withstand chemical or physical processes to be applied to the external surface.

The masking material is thickened (i.e. polymerised) by an energy source, which may be electromagnetic such as visible, ultraviolet or infrared light or collimated light such as laser.

### BRIEF DESCRIPTION OF THE DRAWINGS

Preferred embodiments of the invention are illustrated in the accompanying drawings, in which
- **Fig. 1**: shows a gas turbine blade with cooling configuration,
- **Fig. 2**: shows a section by line II-II through the turbine blade shown in figure 1, comprising a cavity and a plurality of cooling holes and
- **Fig. 3a - g**: shows the steps of the process of the invention, applying masking material to the cooling holes, thickening the masking material and removing any residual masking material of the cooling holes, shown as an example at one cooling hole according to the circle III in figure 2.

The drawings show only the parts important for the invention. Same elements will be numbered in the same way in different drawings.

### DETAILED DESCRIPTION OF THE INVENTION

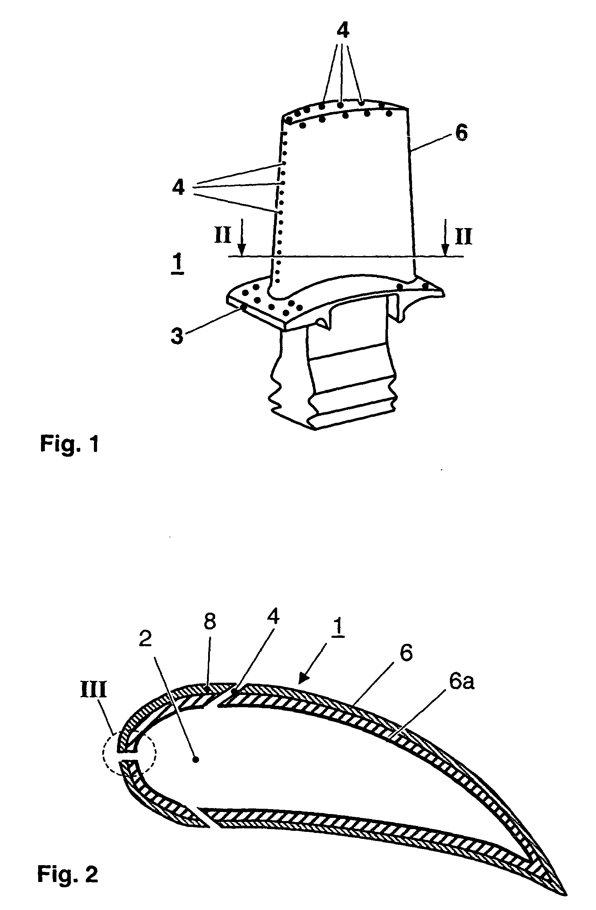

Fig. 1 shows a coated component 1 such as blades or vanes of gas turbine engines comprising a cavity 2, visible in Fig. 2, and cooling holes 4, which are on the external surface 6 of the component 1 as well as on the platform 3 of the component 1. The present invention relates to a process of masking parts of the component 1 before the application of a thermochemical or physical (i.e. mechanical) process on the external surface 6 of the component 1. The thermochemical or physical (or mechanical) process could be one or a combination of a chemical etching method, acid or alkaline stripping, water jet stripping, grit blasting, high speed grit blasting or another abrasive technique.

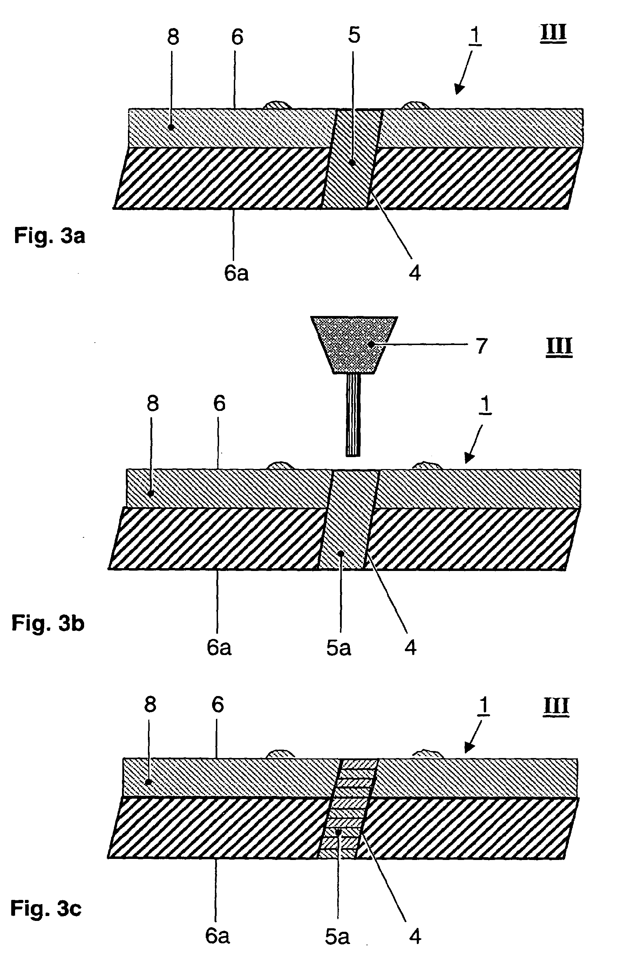

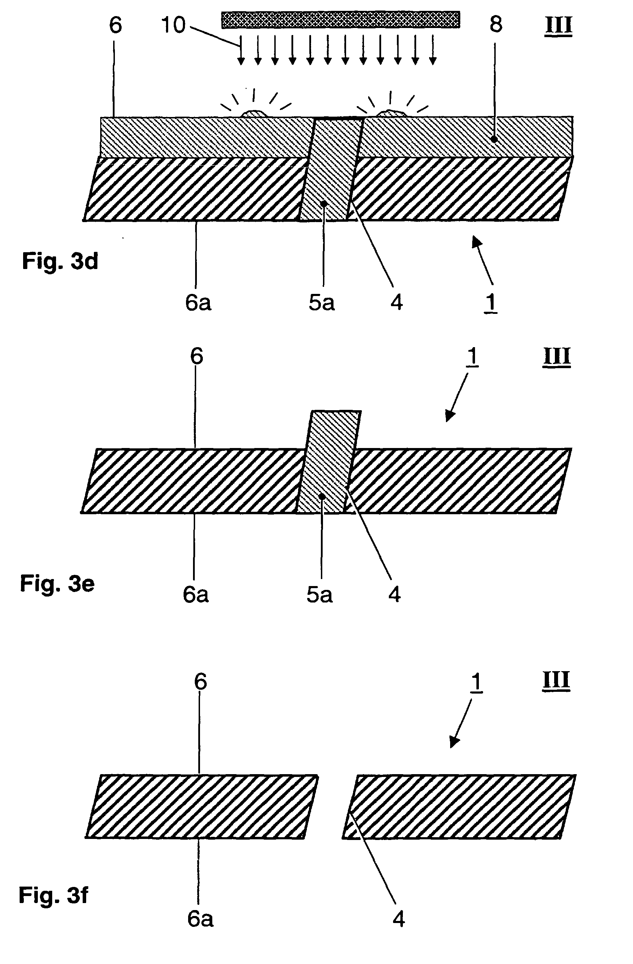

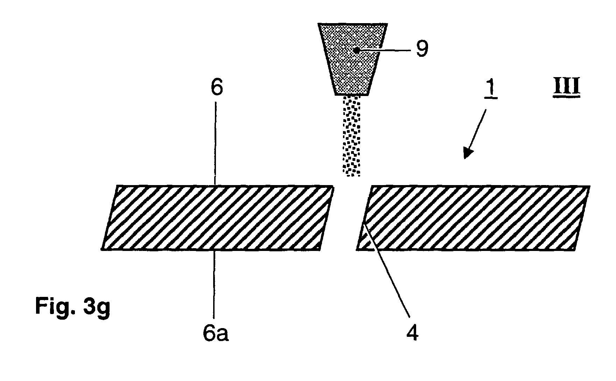

One embodiment would be the protection of a braze joint or local parts of a coated area, such as a platform of a gas turbine blade or a coated area on top of a braze joint as well as other sensitive areas (e.g. impingement plate etc.) during exposure to the thermochemical and/or mechanical stripping process. In another embodiment the cooling holes 4 of the gas turbine component 1 are protected from being dimensionally affected beyond a desired limit during the removal of the coating 8 from the component 1. The example in Fig. 2 and Fig. 3 refers without limitation of the present invention to the protection of the cooling holes 4 during the removal of a coating 8.

According to line II-II in the Fig. 1, Fig. 2 shows a section through the component 1. The component 1 comprising the cavity 2 and three cooling holes 4. The number of the cooling holes 4 is given only as an example and may vary on the purpose the component 1 is used for. The component 1 has an external surface 6 with a coating 8 and an internal surface 6a.

In that case the already coated component 1 will by any means (acid or alkaline stripping, water jet, high speed machining) be stripped of the coating 8 to reveal the external surface 6 of the component 1.

The steps of the process of the invention are given in Fig. 3a to 3g, which show a cooling hole 4 from the component 1 in detail as given as an example in the circle III in Fig. 2.

The Fig. 3a shows the first step of the process according to the invention. The cooling holes 4 are masked with the masking material 5. It is possible to spray or immerse the cooling holes 4 with a material which is at least partially liquid, the masking material 5, and which thickens, which means to become more viscous or solid when exposed to an energy source 7. Preferably the cooling holes are filled by injecting the masking material 5 into the cooling cavity 2 of the component 1 and force it through the cooling holes 4. Excess masking material 5 may be removed afterwards from the external and the internal surface 6, 6a (which can be the cavity 2 or one side of the platform 3 not to be coated) of the component 1 before the application of an energy source 7. As further explained below, one advantageous embodiment is to apply the masking material 5 from the external surface 6, for example by means of a spatula.

As masking material 5 different substances may be used:
1. a organic material or
2. a resin of a plastic such as polyurethane, a polyurethane oligomer mixture, 2-Hydroxyl Methacrylate, Isobornyl Acrylate, Maleic acid, methyl methacrylate, butyl acrylate copolymer, acrylic acid, T-Butyl Perbenzoate, poly(isobutyl methacrylate), poly(vinyl toluene), polyproplyene or a polypropylene / polyurethane oligomer mixture, the class of polymers vetones or silicones, or any mixture thereof,
3. a photopolymerizing resin or a mixture of resins and photoinitiator which polymerize with exposure to ultraviolet light,
4. the masking material 5 may also be a substance that is not at least partially liquid but rather a powder, which means a collection of solid particles. Thickening of the powder then refers to the agglomeration and the sticking together to form clumps or a large solid mass of individual powder particles. The powder would have to be sensitive to an energy source 7, which means that the powder particles agglomerate under the influence of the energy source 7. It could be as well a slurry, which is a suspension of solid particles in a liquid.

In addition, fillers were required to impart the masking materials 5 with thermal and chemical resistance and impact resistance to remove an existing MCrAIY coating and/or TBC. One of the possible ceramic fillers tried was particles or fibres of metal, oxide material such as silica, magnesia, calcia, alumina, zirconia, yttria or a mixture there of, which provided adequate wear, thermal and chemical resistance. Metallic fillers, other oxide fillers or organic materials are also possible.

Fig. 3b shows the second step of the process according to the invention of at least partially thickening, i.e. polymerising, the masking material 5. A desired energy source 7 will be placed from the outside of the component 1 so that the energy impinges directly on said masking material 5 which is in the cooling holes 4. Fig. 3b shows the thickened material 5a as well. Still it is possible that the energy source 7 is placed into an cavity 2 of the component 1.

Different energy sources 7 may be used in order to obtain the desirable result:
1. it can be electromagnetic such as visible light, ultraviolet light or infrared light,
2. it can be a device providing collimated light such as a laser,
3. the energy source 7 can also be a device providing light of a single wavelength or a distribution of wavelengths centered around a desired wavelength with a narrow distribution band,
4. furthermore the energy source 7 may be introduced into the cavity 2 of the component 1 via an optical fiber or
5. the energy source 7 can be sonic vibrations ranging from infrasonic (below 20 Hz) to ultrasonic (above 20,000 Hz) frequencies. In this case the energy source can be a transducer (i.e. an ultrasonic transducer).

The masking material 5a thickened from the energy source 7 containing the filler material may further be heated so as to volatilize or otherwise remove the volatile organic portion of the thickened masking material 5a before the coating 8 is removed from the external surface 6 of the component 1. There may be included in the resin binding agents which are effective in holding together the solid particles of metal or oxide after the volatile organic portion of the masking material 5a is removed so that it can withstand chemical, physical or thermal processes to be applied to the external surface.

According to this invention the polymer masking material 5, when it contained an appropriate mixture of fillers, could be adequately protecting all holes of a component from being dimensionally affected beyond a desired limit by the thermochemical or physical processes carried out on the component. This invention is particularly suited to prevent the changing beyond desired limits of the cooling holes in gas turbine blades and stator vanes with a etching methods designed to remove consumed ex-service coatings.

In addition, the application of the polymerizing material from the external surface 6 of the component 1 prevented complications of plugging in the cooling configuration, or restricted flow through a cooling air distribution insert.

Furthermore, the addition of the polymer from the outer surface of the component via syringe or spatula consumed far less of the polymer compared to any of the prior art such as US-B1-6,265,022 or US-A-4,743,462 using such masking materials 5 in which either the entire cooling configuration had to be filled with polymer, or the entire component 1 had to be dipped in polymer.

As seen in Fig. 3c it was also found that filling the cooling holes 4 in successive stages, and using a gradient of filling materials offered advantages. For example, polymerization was more rapidly carried out on pure polymer placed in the cooling holes 4 in a first layer. Only the layers of material at the uppermost portions of the cooling holes 4 required significant volume fractions of solid fillers to give them increased wear and chemical resistance against the grit blasting required to clean the entire outer surface of the component prior to the coating operation.

It was found that residual polymer on the outer surface 6 of the component 1 would affect the efficiency of the applied thermochemical or physical process, hence the need to clean the entire surface 6. Thus, a substance which fluoresces under ultraviolet light was added to the masking material, which allows an inspection to locate any unwanted excess residual masking material on the external surface 6. As seen in Fig. 3d, the inspection was performed using ultraviolet lights 10 of the types found in normal Florescent Penetrant Inspection (FPI) booths well known to those skilled in the art. Any excess masking on the surface 6 of the component was removed by mechanical means in preparation for the thermochemical or physical process. The FBI can be achieved without interruption of the grit blasting process by integrating the UV light source into the grit blasting cell and equipping the blasting cell with windows of appropriately UV blocking glass or plastic. If necessary, after removing unwanted residual masking material 5, a re-inspection can be carried out using ultraviolet light 10 to locate any further unwanted residual masking material 5. It may be as well be necessary to reapply masking material 5 to the cooling holes, if some of the protecting masking material had been eroded away by the cleaning process of unwanted masking material 5.

In general the filler content is in the range of 10 to 90 vol.-% and in a preferred range of 20 - 60 vol.-%, at least in the upper most portion of the masking material 5 in the cooling hole 4. In one embodiment the masking material 5 at the portion of the cooling hole 4 exit at the external surface 6 of the component 1 contains 30 - 80 vol.-% with a grain size of 40 - 150 µm of the filler material to a depth not less than 1 mm. In another embodiment, the cooling holes 4 are sufficiently long that they do not require complete filling, but only partial filling in a way that the upper portion closest to the external surface 6 is filled to provide the desired result. A range of filler particle sizes if effective in improving wear, chemical and thermal resistance of the masking material. Particle sizes from 1 µm average diameter to over 500 µm diameter are possible. However the average particle size from 10 µm to 150 µm, with a preferred range of 40 to 100 µm showed superior improvements to the thermal resistance, mechanical resistance and general handling of the masking material compared to a general size range.

As seen in figure 3e and as mentioned above the removal of the coating 8 from the external surface 6 will take place with the means known in the state of the art.

After the removal process(es) are completed, the thickened masking material 5a will be removed to reveal cooling holes 4 free of any base metal attack. This is shown in Fig. 3f. For example the removal of the thickening organic masking material 5a can be accomplished by heating the part to 600°C in a furnace for 30 min.

In a further embodiment of the current invention, for the cases where there is still masking material 5 or filler material in the cooling holes 4, a water jet 9 (as shown in Fig. 3g) or an ultrasonic cleaning treatment after the burnout of the polymer could be used to remove any residual masking material which is in the cooling holes 4. This step can be done manually, or by locating the cooling holes 4 using a three dimensional vision system which directs a CNC machine using the same program to drill the cooling holes 4 in the first place.

The component 1 may be heated before or during processing to facilitate the application and/or hardening of at least a portion of the masking material 5.

### Example of the invention

Some of the features and advantages of the present invention are demonstrated by the following two examples.

### Example 1

In the first example, the cooling holes of a coated, gas turbine engine air cooled turbine nozzle article were protected from the influence of the chemically highly reactive baths and mechanical influences occurring during stripping processes of the coating.

To fulfil this purpose an appropriate masking substance was prepared by mixing suitable amounts of an adequate inorganic filler material to an UV-polymerizing agent. Thorough and controlled mixing ensured the preparation of a slurry excluding bubble formation and exhibiting the optimum viscosity required for this special kind of application. The blend contained 50% Al₂O₃-filler with a grain size of 80µm and 50% resin. The preferential ranges for the constitution of the mixture are 20 - 60 % of Al₂O₃-filler with a grain size in the range of 40 - 100 µm and correspondingly 80 - 40 % of polymerizing resin. The blend was subsequently filled into a cartridge of a suitable application system, such as a high precision controlled pneumatic syringe. The slurry was then applied manually into the cooling holes of the gas turbine component ensuring a filling of the cooling structures to a depth range of 5 - 10 mm. In order to cover a wider area in one step a spatula was employed. After partial or complete filling of the component's cooling holes it was exposed to the UV-curing treatment. This was accomplished by exposing the component to a UV light in a closed cell running a semi automatically working process. Another effective means performed was to cure the resin in a manual process employing a focused UV-light. The next process step after curing was the chemical stripping. Therefore the coated component was immersed into the highly reactive, chemical strip baths at elevated temperature. The masking substance endured these conditions including intermediate mechanical and chemical surface activation treatments without suffering any damage. After accomplishment of the stripping process, the component's cooling holes remained unaffected and still covered with the protective masking material. Intermediate visual controls of masked locations enabled an easy detection of damage to the masking protection. Such locations had to be recovered with masking agent before re-exposing the component to the chemical stripping baths. In order to check the extent of coating removal achieved during stripping, the component was exposed to a Heat Tint Test. This check has been carried out under elevated temperatures in an atmospheric furnace. It lead to a complete burning off of the organic portion of the masking agent as a beneficial side effect. In the case where an Etch Test has been carried out instead of the described Heat Tint Test, the burning off of the masking material was carried out in a separate process step. This was performed preferentially in an atmospheric furnace at 600°C for a duration of 30 min. Tenacious residues of the inorganic filler material were removed by exposing the component to an ultrasonic cleaning treatment in a water based solution containing special ingredients which further sustained the complete removal of any residues which blocked the cooling hole structure. A final flow measurement test was then carried out to check the flow characteristics of the stripped component ensuring a complete removal of the masking material.

### Example 2

Another use of the described, mechanically reinforced chemically and thermally highly resistant masking material includes the following steps:

To fulfil this purpose an appropriate masking substance was prepared by mixing suitable amounts of an adequate inorganic filler material to an UV-polymerizing agent. Thorough and controlled mixing ensured the preparation of a corresponding slurry excluding bubble formation and exhibiting the optimum viscosity required for this special kind of application. The blend contained 60% of Al₂O₃-filler with a grain size of 100µm and 40% of resin. The preferential ranges for the constitution of the mixture are 30 - 75% of Al₂O₃-filler with a grain size in the range of 50 - 120 µm and correspondingly 70-25 % of polymerizing resin. The blend was subsequently filled into a cartridge of a suited application system such as a high precision controlled pneumatic syringe. The slurry was applied manually onto acid sensitive structures such as brazed joints or coated areas which should not be stripped. The thickness of such masking applications is in a range of 3 - 5 mm. The extent of areas which can be masked is unlimited. After the covering of the area of the components not to be stripped it was exposed to the UV-curing treatment. This was accomplished by exposing the component to a UV light in a closed cell running a semi automatically working process. Another effective means performed was to cure the resin in a manual process employing a focussed UV-light. The next process step after curing was the chemical stripping. Therefore the component was immersed into the highly reactive, chemical strip baths at elevated temperatures. The masking substance had to withstand these conditions including intermediate mechanical and chemical surface activation treatments without suffering damage. After accomplishment of the stripping process, the masked area of the component remained unaffected and still covered with the protective masking material. Intermediate visual controls of masked locations enabled an easy detection of impaired locations of masking protection. Such sites had to be recovered with masking agent before re-exposing the component to the chemical stripping baths.

In order to check the extent of coating removal achieved during stripping, the component was exposed to a Heat Tint Test. This check was carried out under elevated temperatures in an atmospheric furnace. It lead to a complete burning off of the organic portion of the masking agent as a beneficial side effect. Originally coated and masked areas have also not been attacked and were therefore still coated in its original thickness. Where an Etch Test was carried out instead of the described Heat Tint Test, the burning off of the masking material had to be carried out in a separate following process step. This was preferentially performed in an atmospheric furnace at 600 °C for a duration of 30 min. Tenacious residues of the inorganic filler material have been removed by exposing the component to an ultrasonic cleaning treatment in a water based solution containing special ingredients which further sustained the complete removal of any residues which blocked the cooling hole structure. An additional low pressure shot peening procedure was used to remove very tenacious masking residues from braze joints or protected coating areas. A final visual check of the protected braze structures has been performed. Well protected and therefore unaffected braze joints were brightly shining without exhibiting any porosity after ultrasonic cleaning and shot peening. Masked coating areas also remained unaffected beyond the masking material. They showed the typical discoloration after performing a Heat Tint Test.

Thus, the present approach provides as key objective an advancement in the protection of superalloy substrates and more particularly Ni- and Co-based superalloy substrates by masking acid sensitive areas, coating areas as well as sensitive substrate features with high demand in respect to tolerances.

Although the present invention has been described in connection with specific examples and embodiments, it will be understood by those skilled in the processes involved, that the present invention can be further modified without departing from its intention represented by the claims.

### NUMBERING

- **1**: Component, e.g. blades or vanes for gas turbines
- **2**: Cavity
- **3**: Platform
- **4**: Cooling hole
- **5**: Masking material
- **5a**: Thickened masking material
- **6**: External surface
- **6a**: Internal surface
- **7**: Energy source
- **8**: Coating, coating material
- **9**: Water jet
- **10**: Ultraviolet light

## Claims

1. Process of applying a thermo-chemical or mechanical removal process to a gas turbine component (1) for removal of material from the surface of the component where selected local areas of the component are excluded from the repair process in order to protect the local areas from dimensional changes, the process comprising the steps
- applying a masking material (5) to selected local areas, where the masking material (5) comprises UV-polymerizing plastic, a photo-polymerizing resin or mixture of a resin and a photo-initiator, which polymerize with exposure to UV-light and where the masking material (5) further contains a filler material comprising particles or fibers of metals or oxides,
- thickening the masking material on the selected local areas by polymerizing the masking material using an electro-magnetic energy source (7),
- applying the thermo-chemical or mechanical process to the component (1),
- removing the masking material (5) from the selected local areas.

2. Process according to claim 1
wherein the selected local areas are braze joints, impingement plates, blade platforms, or cooling holes (4) extending from an internal cavity (2) in the component to the surface (6) of the component (1).

3. Process according to claim 1
wherein the masking material (5) is applied to the component (1) from the external surface (6) of the component (1).

4. Process according to claim 2
wherein the masking material (5) is applied to the cooling holes (4) of the component (1) from the internal cavity (2) of the component (1).

5. Process according to claim 1
wherein the electro-magnetic source (7) is directed to the masked selected local areas either from the outside of the component (1) or from the internal cavity (2) of the component (1).

6. Process according to claim 1
wherein following the application of the masking material (5), the surface (6) of the component (1) is cleaned by mechanical means in order to remove unwanted residual masking material.

7. Process according to claim 1
wherein the masking material (5) comprises a UV-fluorescing substance.

8. Process according to claim 7
the surface (6) of the gas turbine component (1) is inspected by means of ultraviolet light in order to locate any residual masking material, which are then removed by mechanical means.

9. Process according to claim 8
wherein following the removal of residual masking material, the surface (6) is reinspected for residual masking material by means of ultraviolet light.

10. Process according to claim 1
wherein the thermo chemical or mechanical removal process is one or a combination of a chemical etching, acid or alkaline stripping, water jet stripping, grit blasting, or any abrasive method.

11. Process according to claim 1
wherein the gas turbine component (1) is heated before or during the process.

12. Process according to claim 1
wherein the masking material (5) is applied in successive layers and after the application of each layer, the masking material is at least partially thickened before the application of the next layer of masking material.

13. Process according to claim 12
wherein the amount of filler is varied gradually from layer to layer of masking material (5).

14. Process according to claim 12,
wherein the masking material (5) of the last layer contains 30 - 80 vol.-% filler material with a grain size of 40-150 µm to a depth of at least 1 mm.

15. Process according to claim 1,
wherein the filler added to the masking material (5) includes particles or fibres of metal or oxide material such as silica, magnesia, calcia, alumina, zirconia, yttria, or a mixture thereof and organic materials.

16. Process according to claim 1,
wherein the filler content is in the range of 10 - 90 vol.-%.

17. Process according to claim 1,
wherein the filler content is in the range of 20 - 60 vol.-%.

18. The process according claim 1,
wherein the filler particle diameter size is on average, or contains mixtures with average diameters, ranging from 1 µm to 500 µm.

19. The process according to claim 1,
wherein the average of the filler particle diameters is in the range from 10 µm to 150 µm.

20. The process according to claim 1,
wherein the average of the filler particle diameters is in the range from 40 µm to 100 µm.

21. Process according to claim 12
wherein the layers of the uppermost portions of the masking material (5) over the cooling holes (4) comprise solid filler in the range of 30-80 vol.-% with a grain size of 40-150 µm with a depth of at least 1 mm.

22. The process according to claim 1,
wherein the thickened masking material (5) from the local area is removed by burning it out and any residual masking material (5) from the local areas is removed by water jet machining or by an ultrasonic cleaning treatment.

23. The process according to claims 2 and 22,
wherein any residual masking material (5) in cooling holes (4) is removed by locating the cooling holes (4) using a vision system, which directs a CNC machine.

24. The process according to claim 1,
wherein thickened masking material (5a) is heated or processed in order to volatilize or otherwise remove the volatile, not polymerized organic portion of the masking material (5) before the thermo chemical or mechanical process on the surface of the component is carried out.

25. The process according to claim 1,
wherein binding agents are included in the masking material (5) which binding agents are effective in holding together the solid particles or fibres of the filler material after the organic portion of the masking material is removed.

## Patentansprüche

1. Verfahren zum Anwenden eines thermochemischen oder mechanischen Entfernungsverfahrens auf ein Gasturbinenwerkstück (1) zum Entfernen von Material von der Oberfläche des Werkstücks, wobei ausgewählte lokale Bereiche von dem Reparaturverfahren ausgenommen werden, um die lokalen Bereiche von dimensionalen Veränderungen zu schützen, wobei das Verfahren folgende Schritte aufweist:
- Aufbringen eines Abdeckmaterials (5) an ausgewählten lokalen Bereichen, wobei das Abdeckmaterial (5) UV-Polymerisierungskunststoff, ein Photopolymerisierungsharz oder ein Gemisch eines Harzes und eines Photoinitiators aufweist, das polymerisiert, wenn es UV-Licht ausgesetzt wird, und wobei das Abdeckmaterial (5) außerdem ein Füllmaterial enthält, das Partikel oder Fasern aus Metallen oder Oxiden aufweist,
- Andicken des Abdeckmaterials an den ausgewählten lokalen Bereichen durch Polymerisieren des Abdeckmaterials unter Benutzung einer elektromagnetischen Energiequelle (7),
- Anwenden des thermochemischen oder mechanischen Verfahrens auf das Werkstück (1),
- Entfernen des Abdeckmaterials (5) von den ausgewählten lokalen Bereichen.

2. Verfahren nach Anspruch 1,
wobei die ausgewählten lokalen Bereiche Lötverbindungen, Prallbleche, Schaufelplattformen, oder Kühlbohrungen (4) sind, die sich von einem inneren Hohlraum (2) in der Komponente zu der Oberfläche (6) des Werkstücks (1) erstrecken.

3. Verfahren nach Anspruch 1,
wobei das Abdeckmaterial (5) auf dem Werkstück (1) von der Außenfläche (6) des Werkstücks (1) aufgebracht wird.

4. Verfahren nach Anspruch 2,
wobei das Abdeckmaterial (5) an den Kühlbohrungen (4) des Werkstücks (1) von dem inneren Hohlraum (2) des Werkstücks (1) aus aufgebracht wird.

5. Verfahren nach Anspruch 1,
wobei die elektromagnetische Quelle (7) entweder von außerhalb des Werkstücks (1) oder von dem inneren Hohlraum (2) des Werkstücks (1) aus auf die abgedeckten lokalen Bereiche gerichtet wird.

6. Verfahren nach Anspruch 1,
wobei nach dem Aufbringen des Abdeckmaterials (5) die Fläche (6) des Werkstücks (1) durch mechanische Mittel gereinigt wird, um unerwünschte Abdeckmaterialreste zu entfernen.

7. Verfahren nach Anspruch 1,
wobei das Abdeckmaterial (5) eine UV-fluoreszierende Substanz enthält.

8. Verfahren nach Anspruch 7,
wobei die Fläche (6) des Gasturbinenwerkstücks (1) mit Hilfe von ultraviolettem Licht untersucht wird, um etwaige Abdeckmaterialreste zu entdecken, die dann durch mechanische Mittel entfernt werden.

9. Verfahren nach Anspruch 8,
wobei nach dem Entfernen der Abdeckmaterialreste die Fläche (6) erneut mit Hilfe von ultraviolettem Licht auf Abdeckmaterialreste untersucht wird.

10. Verfahren nach Anspruch 1,
wobei das thermochemische oder mechanische Entfernungsverfahren eins der Verfahren chemisches Ätzen, Säurebeizen oder alkalisches Beizen, Wasserstrahlen, Sandstrahlen, oder jedes andere Abtragungsverfahren oder eine Kombination derselben ist.

11. Verfahren nach Anspruch 1,
wobei das Gasturbinenwerkstück (1) vor dem Verfahren oder während des Verfahrens erwärmt wird.

12. Verfahren nach Anspruch 1,
wobei das Abdeckmaterial (5) in aufeinander folgenden Schichten aufgebracht wird, und nach Aufbringen jeder einzelnen Schicht das Abdeckmaterial vor dem Aufbringen der nächsten Schicht von Abdeckmaterial wenigstens teilweise angedickt wird.

13. Verfahren nach Anspruch 12,
wobei die Menge des Füllmittels allmählich von Schicht zu Schicht des Abdeckmaterials (5) variiert wird.

14. Verfahren nach Anspruch 12,
wobei das Abdeckmaterial (5) der letzten Schicht 30 bis 80 Vol% Füllmaterial mit einer Korngröße von 40 bis 150 µm bis zu einer Tiefe von wenigstens 1 mm enthält.

15. Verfahren nach Anspruch 1,
wobei das Füllmittel, das zu dem Abdeckmaterial (5) hinzugefügt wird, Partikel oder Fasern aus Metall oder Oxidmaterial wie z.B. Kieselerde, Magnesiumoxid, Calciumoxid, Aluminiumoxid, Zirkoniumoxid, Yttriumoxid oder ein Gemisch derselben und organische Materialien enthält.

16. Verfahren nach Anspruch 1,
wobei der Füllmittelanteil im Bereich von 10 bis 90 Vol% liegt.

17. Verfahren nach Anspruch 1,
wobei der Füllmittelgehalt im Bereich von 20 bis 60 Vol% liegt.

18. Verfahren nach Anspruch 1,
wobei die Füllmittelpartikel durchschnittlich einen Durchmesser von, oder ein Gemisch mit mittleren Durchmessern von zwischen 1 µm bis 500 µm enthalten.

19. Verfahren nach Anspruch 1,
wobei der durchschnittliche Durchmesser der Füllmittelpartikel im Bereich von 10 µm bis 150 µm liegt.

20. Verfahren nach Anspruch 1,
wobei der durchschnittliche Durchmesser der Füllmittelpartikel im Bereich von 40 µm bis 100 µm liegt.

21. Verfahren nach Anspruch 12,
wobei die Schichten der obersten Abschnitte des Abdeckmaterials (5) über den Kühlbohrungen (4) festes Füllmittel im Bereich von 30 bis 80 Vol% mit einer Korngröße von 40 bis 150 µm mit einer Tiefe von wenigstens 1 mm aufweisen.

22. Verfahren nach Anspruch 1,
wobei das angedickte Abdeckmaterial (5) von dem lokalen Bereich durch Ausbrennen entfernt wird, und etwaige Abdeckmaterialreste (5) von den lokalen Bereichen durch Wasserstrahlbehandlung oder durch eine Ultraschall-Reinigungsbehandlung entfernt werden.

23. Verfahren nach den Ansprüchen 2 und 22,
wobei etwaige Abdeckmaterialreste (5) in Kühlbohrungen (4) entfernt werden, indem die Kühlbohrungen (4) mit Hilfe eines Videosystems lokalisiert werden, das eine CNC-Maschine führt.

24. Verfahren nach Anspruch 1,
wobei angedicktes Abdeckmaterial (5a) erwärmt oder behandelt wird, um die flüchtigen, nicht polymerisierten organischen Anteile des Abdeckmaterials (5) zu verflüchtigen oder in anderer Weise zu entfernen, bevor das thermochemische oder mechanische Verfahren an der Oberfläche der Komponente ausgeführt wird.

25. Verfahren nach Anspruch 1,
wobei Bindemittel in dem Abdeckmaterial (5) enthalten sind, wobei die Bindemittel wirksam sind, um die festen Partikel oder Fasern des Füllmaterials zusammenzuhalten, nachdem der organische Anteil des Abdeckmaterials entfernt wurde.

## Revendications

1. Procédé d'application d'un procédé d'enlèvement thermochimique ou mécanique à un composant de turbine à gaz (1) pour enlèvement de matière de la surface du composant où des zones locales sélectionnées du composant sont exclues du procédé de réparation afin de protéger les zones locales de changements dimensionnels, le procédé comprenant les étapes :
- d'application d'un matériau de masquage (5) à des zones locales sélectionnées, où le matériau de masquage (5) comprend un plastique polymérisant aux UV, une résine photopolymérisante ou un mélange d'une résine et d'un photoinitiateur qui polymérise par exposition à un rayonnement UV, et où le matériau de masquage (5) contient en outre un matériau de charge comprenant des particules ou des fibres de métaux ou d'oxydes,
- d'épaississement du matériau de masquage sur les zones locales sélectionnées par polymérisation du matériau de masquage à l'aide d'une source d'énergie électromagnétique (7),
- d'application du procédé thermochimique ou mécanique au composant (1),
- d'enlèvement du matériau de masquage (5) des zones locales sélectionnées.

2. Procédé selon la revendication 1
dans lequel les zones locales sélectionnées sont des brasures fortes, des plaques d'impact, des plates-formes d'aube ou des trous de refroidissement (4) s'étendant depuis une cavité interne (2) dans le composant jusqu'à la surface (6) du composant (1).

3. Procédé selon la revendication 1
dans lequel le matériau de masquage (5) est appliqué au composant (1) depuis la surface externe (6) du composant (1).

4. Procédé selon la revendication 2
dans lequel le matériau de masquage (5) est appliqué aux trous de refroidissement (4) du composant (1) depuis la cavité interne (2) du composant (1).

5. Procédé selon la revendication 1
dans lequel la source électromagnétique (7) est dirigée vers les zones locales sélectionnées masquées depuis l'extérieur du composant (1) ou depuis la cavité interne (2) du composant (1).

6. Procédé selon la revendication 1
dans lequel après l'application du matériau de masquage (5), la surface (6) du composant (1) est nettoyée par un moyen mécanique afin de retirer le matériau de masquage résiduel indésirable.

7. Procédé selon la revendication 1
dans lequel le matériau de masquage (5) comprend une substance fluorescente aux UV.

8. Procédé selon la revendication 7
dans lequel la surface (6) du composant de turbine à gaz (1) est inspectée au moyen d'un rayonnement ultraviolet afin de localiser tout matériau de masquage résiduel, qui est ensuite retiré par un moyen mécanique.

9. Procédé selon la revendication 8
dans lequel après l'enlèvement du matériau de masquage résiduel, la surface (6) est de nouveau inspectée pour rechercher du matériau de masquage résiduel au moyen d'un rayonnement ultraviolet.

10. Procédé selon la revendication 1
dans lequel le procédé d'enlèvement thermochimique ou mécanique est l'un ou une combinaison d'une gravure chimique, d'un décapage acide ou alcalin, d'un décapage par jet d'eau, d'un grenaillage ou de tout procédé abrasif.

11. Procédé selon la revendication 1
dans lequel le composant de turbine à gaz (1) est chauffé avant ou pendant le procédé.

12. Procédé selon la revendication 1
dans lequel le matériau de masquage (5) est appliqué en couches successives et après l'application de chaque couche, le matériau de masquage est au moins partiellement épaissi avant l'application de la couche suivante de matériau de masquage.

13. Procédé selon la revendication 12
dans lequel la quantité de charge varie progressivement d'une couche de matériau de masquage (5) à l'autre.

14. Procédé selon la revendication 12
dans lequel le matériau de masquage (5) de la dernière couche contient 30-80 % en volume de matériau de charge avec une grosseur de grain de 40-150 µm à une profondeur d'au moins 1 mm.

15. Procédé selon la revendication 1
dans lequel la charge ajoutée au matériau de masquage (5) comporte des particules ou des fibres d'un matériau métallique ou oxydé tel que la silice, la magnésie, l'oxyde de calcium, l'alumine, la zircone, l'oxyde d'yttrium ou un mélange de ceux-ci et de matériaux organiques.

16. Procédé selon la revendication 1
dans lequel la teneur de la charge se situe dans la gamme de 10 à 90 % en volume.

17. Procédé selon la revendication 1
dans lequel la teneur de la charge se situe dans la gamme de 20 à 60 % en volume.

18. Procédé selon la revendication 1
dans lequel le diamètre des particules de charge est en moyenne, ou contient des mélanges avec des diamètres moyens allant, de 1 µm à 500 µm.

19. Procédé selon la revendication 1
dans lequel la moyenne du diamètre des particules de charge se situe dans la gamme de 10 µm à 150 µm.

20. Procédé selon la revendication 1
dans lequel la moyenne du diamètre des particules de charge se situe dans la gamme de 40 µm à 100 µm.

21. Procédé selon la revendication 12
dans lequel les couches des parties supérieures du matériau de masquage (5) sur les trous de refroidissement (4) comprennent une charge solide dans la gamme de 30 à 80 % en volume avec une grosseur de grain de 40-150 µm avec une profondeur d'au moins 1 mm.

22. Procédé selon la revendication 1
dans lequel le matériau de masquage épaissi (5a) des zones locales est retiré en le brûlant et tout matériau de masquage (5) résiduel est retiré des zones locales par usinage au jet d'eau ou par un traitement de nettoyage aux ultrasons.

23. Procédé selon les revendications 2 et 22
dans lequel tout matériau de masquage (5) résiduel dans les trous de refroidissement (4) est retiré en localisant les trous de refroidissement (4) à l'aide d'un système de vision, qui dirige une machine CNC.

24. Procédé selon la revendication 1
dans lequel le matériau de masquage épaissi (5a) est chauffé ou traité afin de volatiliser ou retirer d'une autre manière la partie organique volatile, non polymérisée du matériau de masquage (5) avant que le procédé thermochimique ou mécanique ne soit mis en oeuvre sur la surface du composant.

25. Procédé selon la revendication 1
dans lequel des agents de liaison sont inclus dans le matériau de masquage (5), lesquels agents de liaison sont efficaces pour maintenir ensemble les particules solides ou les fibres du matériau de charge après que la partie organique du matériau de masquage a été retirée.
